## Europäisches Patentamt

## European Patent Office

## Office européen des brevets

(11) Veröffentlichungsnummer: **0 153 753**

**A2**

# (12) EUROPÄISCHE PATENTANMELDUNG

(21) Anmeldenummer: 85102259.0

(22) Anmeldetag: 28.02.85

(51) Int. Cl.⁴: **H 04 M 3/42**
 **H 04 Q 3/54**

(30) Priorität: 28.02.84 DE 3407216

(43) Veröffentlichungstag der Anmeldung:
04.09.85 Patentblatt 85/36

(84) Benannte Vertragsstaaten:
AT BE CH DE FR GB IT LI LU NL SE

(71) Anmelder: Siemens Aktiengesellschaft
Berlin und München Wittelsbacherplatz 2
D-8000 München 2(DE)

(72) Erfinder: Lybeer, Roger
Bund. Meirsonstraat 41
Destelbergen(BE)

(54) Verfahren für eine Fernsprechanlage, insbesondere Fernsprechnebenstellenanlage, mit Zuordnung besonderer Bedienfunktion zu Endstellen.

(57) Aufgrund der Bewertung einer einer gewählten Kennzahl entsprechenden Kennung in der zentralen Steuereinrichtung wird eine erste Funktionskennung (beispielsweise für eine Zuteilung einer Sekretärfunktion) in Zuordnung zu einer der Kennung entsprechenden Teilnehmerstelle in einer veränderbaren, der Teilnehmerstelle zugeordnete Informationen enthaltenden und bei jedem Verbindungsaufbau abgefragten Datenspeicher abgespeichert.

FIG 1

Verfahren für eine Fernmeldeanlage, insbesondere für eine Fernsprechnebenstellenanlage, mit Zuordnung besonderer Bedienfunktionen zu entstellen.

Die Erfindung bezieht sich auf ein Verfahren für eine Fernmeldeanlage, insbesondere für eine Fernsprechnebenstellenanlage, mit Steuereinrichtungen, mit den Steuereinrichtungen zugeordneten veränderbaren und nicht veränderbaren Speichern und mit Vergleichsmitteln für die wahlweise Abwicklung von vermittlungstechnischen Verbindungen bzw. von in Zusammenhang mit einer Funktionszuteilung zu für vermittlungstechnische Vorgänge vorgesehenen Mitteln gesteuerten, betriebstechnischen Vogängen, wobei nach Einleitung der Abschaltung von die vermittlungstechnischen Vorgänge steuernden Mittel durch Übertragung einer entsprechenden Sonderkennzahl und/oder einer Sonderkennung zu entsprechenden Bewertungsmitteln einer Steuereinrichtung andere Vorgänge als vermittlungstechnische Vorgänge steuerbar sind.

Durch die DE-OS 31 30 125.8 ist bereits ein Verfahren zur Durchführung der Funktionsprüfung bekannt, bei dem einem veränderbaren Speicher ein Speicherplatz zugeordnet ist, dessen Speicherinhalt über eine periphere Einheit derart beeinflußbar ist, daß im Falle des normalwirksamen Anschlusses des Arbeitsspeichers an dem Datenübertragungsleitungsbündel der Fernmeldeanlage eine erste Information und im Falle für periphere Anschlußeinheiten durchzuführende Funktionsprüfungen eine andere, zweite Information speicherbar ist, so daß an stelle des Arbeitsspeichers ein den Verfahrensablauf der Funktionsprüfung bestimmen-Mt 1 Bo / 7.2.1984

der Speicher wirksam an dem Datenübertragungsleitungsbündel angeschaltet wird. Die vorgenannte Ein- und Ausspeicherung der die Funktionsprüfung einleitenden Information erfolgt durch einen von einer eine Auswertung
einer an einem berechtigten Anschluß, beispielweise Bedienungs- oder Prüfplatz, abgegebenen Kennzeichnung bzw.
eines an zentraler Stelle erzeugten Funktionsprüfungsbefehls ausführenden Einrichtung abgegebenen Befehls.
Hierdurch sind also durch Übertragung einer entsprechenden Sonderkennzahl und/oder einer Sonderkennung zu entsprechenden Bewertungsmitteln einer Steuereinrichtung
andere Vorgänge als vermittlungstechnische Vorgänge
steuerbar.

Die Aufgabe der vorliegenden Erfindung besteht darin, in
einfacher Weise bei der Montage einer Fernsprechnebenstellenanlage bei einem Kunden bzw. auch nachträglich
die Möglichkeit zu schaffen durch Übertragung einer Kennzahl in Abhängigkeit einer entsprechenden, zusätzlichen
Bewertung in der Steuereinrichtung in der Fernmeldeanlage, insbesondere in der Fernsprechnebenstellenanlage,
besondere Bedienfunktionen gezielt zuzuteilen.

Dies wird dadurch erreicht, daß nach Abschaltung der vermittlungstechnische Vorgänge steuernden Mittel durch Bewertung einer gewählten und von einer peripheren Einrichtung übertragenen Kennzahl ein betriebstechnischer Vorgang in der Weise eingeleitet wird, daß aufgrund der Bewertung der in der Steuereinrichtung empfangenen, der gewählten Kennzahl entsprechenden Kennung eine erste Funktionskennung (beispielsweise für eine Zuteilung einer
Sekretärfunktion) in Zuordnung zu einer der Kennung entsprechenden Teilnehmerstelle in einen veränderbaren, der
Teilnehmerstelle zugeordnete Informationen enthaltenden
und bei jedem Verbindungsaufbau abgefragten Datenspei-

cher abgespeichert wird.

Auf diese Weise können bestimmte Endstellen bestimmte Bedienfunktionen zugeteilt werden. Diese Zuteilung kann sowohl bei der Montage der Anlage als auch nachträglich in einfacher Weise von einer peripheren Einrichtung aus, beispielsweise von einem Vermittlungsplatz aus, vorgenommen werden. Bei der Bedienungsfunktion kann es sich beispielsweise um die Zuteilung einer Sekretärfunktion bzw. einer Cheffunktion handeln.

Gemäß einer weiteren Ausbildung der Erfindung wird durch Bewertung einer nach einer ersten gewählten Kennzahl durch Abgabe jeweils eines Sonderkennzeichens (beispielsweise Betätigen einer Rautentaste) und einer zweiten Kennzahl sowohl der der gewählten ersten Kennzahl zugeordneten Kennung im veränderbaren Speicher als auch eine einem der jeweils gewählten weiteren Kennzahl und entsprechenden Kennung zugeordnete Kennung im veränderbaren Speicher als weitere Information zugeordnet, welche für den Betrieb der betreffenden Teilnehmerstelle maßgeblich ist.

Gemäß einer weiteren Ausbildung der Erfindung wird mit der ersten Kennzahl eine Sekretärfunktion und/oder mit zumindest einer der weiteren gewählten Kennzahlen eine Cheffunktion einer Teilnehmerstelle zugeordnet.

Gemäß einer weiteren Ausbildung der Erfindung erfolgt durch Vergleichsschaltmittel eine Überprüfung der in der Steuereinrichtung zu bewertenden Kennzahlen und/oder Kennung und im Falle einer fehlenden Eindeutigkeit sind Signale zur Aufforderung zu einer Korrektur bzw. zur Kennzeichnung des Fehlverhaltens und/oder zum Löschen des bereits eingeleiteten Zustandes steuerbar.

Hierdurch können Sekretär- und Cheffunktionen einer Teilnehmerstelle von einer peripheren Einrichtung aus beliebig zugeteilt werden. Bei fehlender Eindeutigkeit können Signale zur Aufforderung zu einer Korrektur bzw. zur Kennzeichnung des Fehlverhaltens und/oder zum Löschen des bereits eingeleiteten Zustandes selbsttätig ausgelöst werden.

Nachfolgend ist anhand der Zeichnungen ein Ausführungsbeispiel der Erfindung beschrieben.

In der FIG. 1 ist eine digitale Fernsprechnebenstellenanlage gezeigt, in der das erfindungsgemäße Verfahren anwendbar ist.

In der FIG. 2 ist eine analoge Anlage gezeigt, in der ebenfalls das erfindungsgemäße Verfahren anwendbar ist.

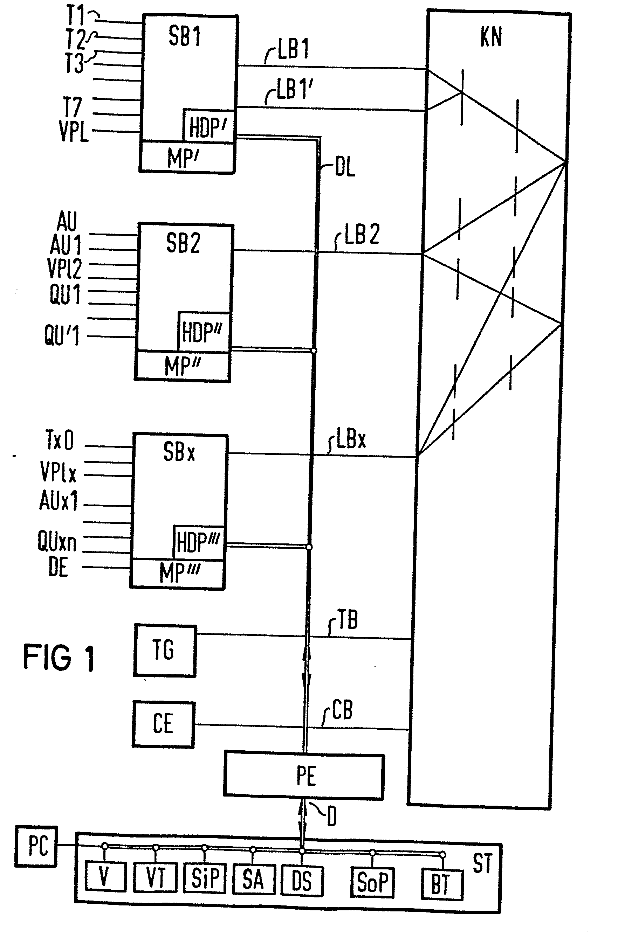

In der FIG. 1 ist eine digitale Fernsprechnebenstellenanlage mit als Beispiel drei Schnittstellenbaugruppen SB1 bis SBx gezeigt, an denen entweder beispielsweise sieben Teilnehmerstellen und ein Vermittlungsplatz VP2 bzw. Amtsübertragungen AU, AU1, ein Vermittlungsplatz VPL2 und Querverbindungsleitungen QU1 bis QU'1 bzw. Teilnehmerstellen TxO, ein Vermittlungsplatz VPlx, Amtsübertragungen AUx1 und Querverbindungsleitungsübertragungen QUxn, sowie auch Datenendgeräte DE anschaltbar sind. Jede der Schnittstellen ist über ein entsprechendes Leitungsbündel LB1 bzw. LB2 bzw. LBx mit dem Sprechwegekoppelnetzwerk KN und über das gemeinsame Datenübertragungsleitungsbündel DL mit der zentralen Steuereinrichtung ST verbunden. Letztere Verbindung verläuft über die periphere Einrichtung PE, in der gegebenenfalls Informationen, die nicht gleichzeitig in der Steuereinrichtung ST verarbeitbar sind, zwischengespeichert und auch gegebenenfalls umgesetzt werden. Über jedes der Leitungsbündel sind sowohl der Sprachübertragung entsprechenden Informationen als auch andere Daten im Pulscodemodulationsverfahren übertragbar: Der Informationsaustausch zwischen angeschalteten Endstellen, beispielsweise Teilnehmerstellen und Vermittlungsplätze, sowie auch angeschalteten Amtsleitungen, Querverbindungsleitungen und sonstigen Leitungen erfolgt über das Sprechwegekoppelnetzwerk KN. Hierbei ist zu erwähnen, daß über die Sprechwege nicht nur die Sprachinformationen, sondern auch sonstige Informationen und Daten im Pulscodemodulationsverfahren übertragbar sind. Über das Sprechwegekoppelnetzwerk sind auch zusätzliche, nur andeutungsweise dargestellte Einrichtungen wie Tongeneratoren TG, Codeempfänger CE und andere nicht dargestellte Einrichtungen, beispielsweise Dateneinrichtungen und Prüfschnittstellen anschaltbar.

Der Verbindungsaufbau läuft im Prinzip in der nachfolgend beschriebenen Weise ab. In einer Schnittstellenbaugruppe,

0153753

z.B. SB1, wird erkannt, wenn ein Teilnehmer den Hörer abhebt. Dieser Teilnehmer wird über das Sprechwegekoppelnetzwerk mit einem Tongenerator TG und mit einem Codeempfänger CE verbunden. Mit den gewählten Ziffern wird der Verbindungswunsch über die peripheren Einrichtung PE der zentralen Steuereinrichtung ST mitgeteilt. Die Vollständigkeit einer Kennzahl und die entsprechende Berechtigung der anrufenden Teilnehmerstelle bzw. der ankommend belegten Verbindungsleitungsübertragung wird geprüft. Von der zentralen Steuereinrichtung wird, wie bei der Verbindungsherstellung zum Tongenerator TG und zum Codeempfänger CE auch der weitere Verbindungsaufbau zur anzurufenden Stelle gesteuert. Falls erforderlich werden Informationen der betreffenden Schnittstellenbaugruppe, z.B. SB1, in Abhängigkeit von Befehlen der zentralen Steuereinrichtung ST zu einer anderen Schnittstellenbaugruppe, z.B. SBx, über das Datenübertragungsleitungsbündel DL übertragen. Gegebenenfalls werden auch über das Sprechwegekoppelnetzwerk Daten von der einen Schnittstellenbaugruppe zur anderen Schnittstellenbaugruppe bzw. über die Verbindungsleitungsübertragungen weitergegeben. Hierdurch ist auch ohne zusätzliche Verbindungsleitungen ein Datenaustausch zu anderen Anlagen möglich. Bei der gezeigten Darstellung ist davon ausgegangen, daß den Teilnehmerendstellen bereits Umsetzeinrichtungen für die Umsetzung analoger Informationen in digitale Informationen und umgekehrt (sogenannte Codec) zugeordnet sind. Die weitere Funktionsanpassung erfolgt in den dargestellten Schnittstellenbaugruppen. Für die Umsetzung von analogen Signalen analoger Endstellen bzw. analoger Verbindungsleitungsübertragungen können der Schnittstellenschaltung der Schnittstellenbaugruppe auch entsprechende Umsetzschaltmittel (CODEC) zugeordnet werden.

Für die Übertragung der Sprachinformationen und der sonstigen Dateninformationen über das Sprechwegekoppelnetzwerk KN wird das Übertragungssystem PCM 30 verwendet. Bei diesem Übertragungssystem müssen in jeder Richtung innerhalb von 125 µs hintereinander 30 Codewörter mit je 8-Bit übertragen werden. Zu diesen 30 Codewörtern gehören zwei weitere 8-Bit-Informationen und zwar eine für die Signalisierung und eine Information, die abwechselnd ein Rahmenkennungswort und ein Meldewort enthält. Die 30 Codewörter bilden zusammen mit den genannten, weiteren 2 x 8 Bit einen Pulsrahmen. Die Pulsrahmen werden unmittelbar aneinandergereiht übertragen. Die Rahmenkennungswörter der Pulsrahmen synchronisieren Sende- und Empfangsteile des PCM 30-Übertragungssystems.

Über das zu der zentralen Steuereinrichtung ST führende Datenübertragungsleitungsbündel DL werden Informationen in einem Nachrichtenformat mit variabler Datenlänge übertragen und zwar nach einem Hochpegel-Zeichengabeverfahren HDLC. Das Informationsformat ist dabei in der Länge von 5 bis 32 Bytes variabel und enthält in der Regel Adresse, Folgenummer, Prüfzeichen und die eigentliche Nachricht.

In der zentralen Steuereinrichtung ST sind für die Verarbeitung der empfangenen Informationen und für die Zurückübertragung entsprechender Befehle mehrere, unterschiedliche Speicher und Verarbeitungseinrichtungen, wie Vergleicher und andere Schaltmittel vorhanden. Die einzelnen zu der zentralen Steuereinrichtung ST gehörenden Speicher und Einrichtungen sind nachfolgend in Zusammenhang mit der Erläuterung des erfindungsgemäßen Verfahren näher beschrieben.

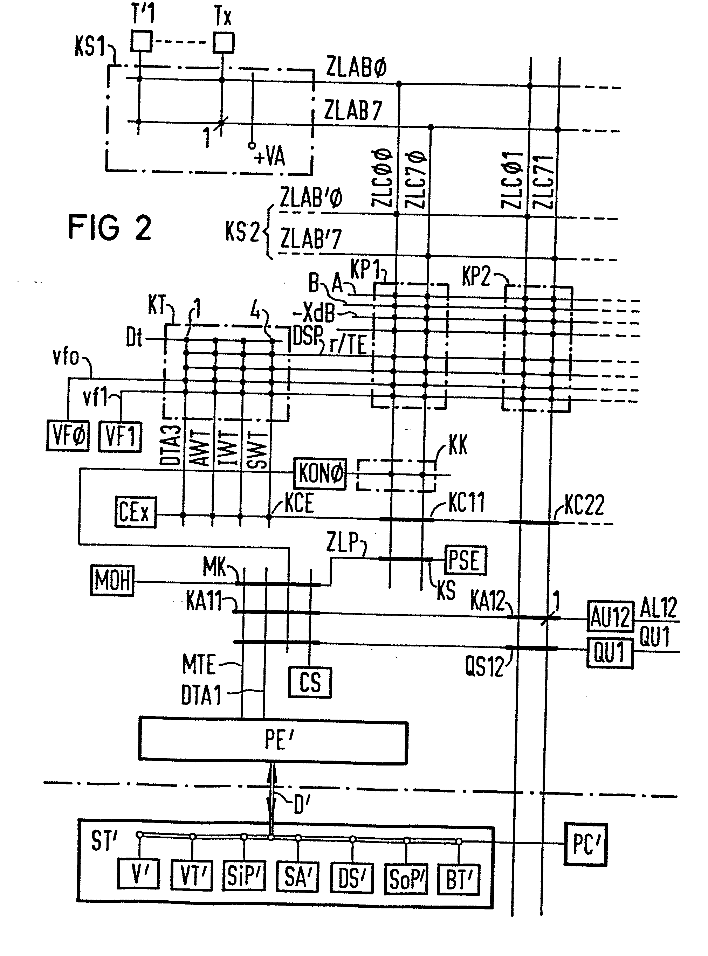

In der FIG. 2 ist eine Fernsprechnebenstellenanlage gezeigt die mit analogen Signalen betreibbar sein soll.

Bei dieser analogen Fernsprechnebenstellenanlage handelt
es sich um eine zentralgesteuerte Anlage, bei der der
zentralen Steuereinrichtung ST' eine nicht dargestellte
Wegesucheinrichtung und Schaltmittel zur Durchsteuerung
der durchzuschaltenden Koppelpunkte zugeordnet sind,
die in bekannter Weise arbeiten. Die im System vorhandenen
Koppler schalten die Sprechwege einadrig durch. Die Koppelpunkte selbst sind sogenannte elektronische Koppelpunkte, zum Beispiel CMOS-Bausteine. Bei der in FIG. 2
dargestellten Anlage sind als Endstellen Teilnehmerstellen T1 bis Tx an einer ersten Koppelstufe KS1 und sind
weitere nicht dargestellte Teilnehmerstellen und sonstigen Endstellen an weiteren nicht dargestellten Koppelstufen anschaltbar. Für die Koppelstufe KS1 sind die
Zwischenleitungen ZLAB∅ bis ZLAB7 und für eine weitere
nicht dargestellte Koppelstufe KS2 die Zwischenleitungen
ZLAB'∅ bis ZLAB'7 gezeigt. Die vorgenannten Zwischenleitungen führen zu parallelgeschalteten Kopplern von denen
als Beispiel nur zwei, KP1 und KP2, dargestellt sind.

Die Durchschaltung der Koppelpunkte erfolgt, wie bereits
erwähnt unter Zuhilfenahme der zentralen Steuereinrichtung ST'und der der zentralen Steuereinrichtung ST'
zugeordneten Wegesucheinrichtung. Sprechstellen unterschiedlicher Gruppen werden durch Betätigen jeweils
eines Koppelpunktes eines Kopplers, z.B. KS1,der einen
Gruppe und eines Koppelpunktes des Kopplers der anderen
Gruppe, z.B. KS2 für eine Sprechverbindung, über welche
auch sonstige Daten übertragen werden können, miteinander
verbunden. Eine Verbindung der Teilnehmerstelle Tx
mit einer Amtsübertragung, z.B. AU12, für die Herstellung einer Verbindung über die Amtsleitung AL12 erfolgt
beispielsweise durch Betätigen des Koppelpunktes KS1/1
des Kopplers KS1 und des Koppelpunktes KA12/1 des Kopplers KA12. Die Verbindung verläuft dann über die Zwischenleitun-

gen ZLAB7 und ZLC71. Für die Herstellung von Internverbindungen können beliebige Koppelpunkte in der Zeile
bzw. in der Spalte für die Verbindung entsprechender
Ein- und Ausgänge zur anrufenden bzw. zur angerufenen
Stelle betätigt werden. Beim Amtskoppler ist dagegen
jedem Ausgang fest eine Amtsübertragung zugeordnet,
die über einen der Eingänge d.h. über eine der Zwischenleitungen für abgehene Verbindungen und umgekehrt für
ankommende Verbindungen belegbar ist.

Für eine Verbindungsherstellung innerhalb der Fernsprechnebenstellenanlage und auch für die Weiterübertragung
von Wahlkennzeichen zum öffentlichen Amt ist die Anschaltung eins Codeempfängers, z.B. CEx, an der zu anrufenden
Teilnehmerstelle führenden Leitung erforderlich. Auch ist
die Anschaltung von Wahlkennzeichen zur anrufenden bzw.
angerufenen Teilnehmerstelle notwendig. Zu diesem Zwecke
sind entsprechende Koppler KC11 und KT in den Zwischenleitungen, die zu den Endstellen (Teilnehmerstellen, Vermittlungsstelle) und Verbindungsleitungsübertragungen,
Amtsübertragungen führen, eingefügt. Der Codeempfänger CEx
wird beispielsweise über den Koppler KC11 mit einer der
Endstellen und über den Koppler KC22 mit einer der Amtsübertragungen oder Querverbindungsleitungsübertragungen
verbunden. Die Anschaltung des Codeempfängers erfolgt
beispielsweise nach Abheben des Hörers an einer Teilnehmerstelle in Abhängigkeit entsprechender Steuerbefehle
der zentralen Steuereinrichtung ST'. Wählt eine Teilnehmerstelle eine Amtskennziffer, so erfolgt die Durchschaltung der anrufenden Teilnehmerstelle, z.B. Tx, durch
Betätigen eines entsprechenden Koppelpunktes KS1/1 des
der Teilnehmerstelle zugeordneten Kopplers KS1 zur Amtsübertragung, beispielsweise über den Koppelpunkt KA12/1
des Amtskopplers KA12. Für die Aufnahme der über die Amtsübertragung zu empfangenen Wahlkennzeichen

0153753

ger wird beispielsweise anstelle über den Koppler KC11 jetzt über den Koppler KC22 dieser Codeempfänger CEx an die entsprechende durch die Amtsübertragung belegte Zwischenleitung ZLC71 angeschaltet. Im Koppler KA12 ist für die Durchschaltung nur ein Koppelpunkt je Zeile gleichzeitig durchschaltbar.

Die Anschaltung der Hörsignale, d.h. der Hörtöne, erfolgt teilweise über einen der Koppler KP1 bis KP2 und teilweise über den Koppler KCE, der in den Zwischenleitungen eingefügt ist, über die die Codeempfänger angeschaltet werden. Über den Koppler KCE werden die Töne angeschaltet, die in Zusammenhang stehen mit der Wahl, also während der Anschaltezeit der Codeempfänger. So wird beispielsweise über die Leitung SWT ein Sonderwählton, über die Leitung IWT der interne Wählton, über die Leitung AWT der Amtswählton und über die Leitung DTA3 ein Dauerton angeschaltet. Der Rhythmus der Töne wird durch Öffnen und Schliessen der Koppelpunkte KT1 bis 4 des Kopplers KT bestimmt. Über die Koppelpunkte KT1 bis 4 des Kopplers KT, denen ein Dauerton für die erstgenannten drei Wähltonarten zugeführt wird steuert die zentrale Steuereinrichtung ST' den Takt. Der Koppler KCE für die Anschaltung der Wähltöne vereinfacht das Anschalteverfahren und reduziert die Anzahl notwendiger Koppelpunkte in den Kopplern KP1, KP2. Über die Koppler KP1, KP2 werden andere Töne, beispielsweise der Besetztton über die Ader B der Aufschalteton über die Ader A angeschaltet. Über die Zwischenleitung DSP werden Potentiale für die Durchschalteprüfung der Koppelpunkte angeschaltet. Über den Anschluß HTE ist ein Hörzeichen anschaltbar um eine Prüfung der angeschalteten Endstelle bzw. der angeschalteten Übertragung beispielsweise durch Spiegelung der Signale vorzunehmen. Über die Zwischenleitungen vf0 und vf1 sind Vermittlungsplätze VF0 und VF1 an den Verbindungswegen zu den Endstellen und Leitungs- übertragungen anschaltbar. Diesen Vermittlungsplätzen können über den Koppler KT unmittelbar Wähltöne zugeleitet werden.

Der Codesender CS überträgt über die entsprechenden Koppler KA12, QS12 Mehrfrequenzcodezeichen als Wahlkennzeichen zu angeschalteten Verbindungsleitungen, d.h. Amtsleitungen bzw. Querverbindungsleitungen und zwar erfolgt diese Übertragung in Abhängigkeit des über die jeweilige Verbindungsleitung übertragenen Wahlbereitschaftskennzeichens, d.h. des übertragenen Wählzeichens aus der Gegenanlage. Die Überwachung des Empfangs eines derartigen Hörzeichens als Wahlbereitschaftskennzeichen erfolgt über die Ader HTE durch die zentrale Steuerung.

Über einen weiteren Koppler KS ist eine Personensucheinrichtung mit den Endstellen über die entsprechenden Koppelpunkte anschaltbar. Ferner ist eine zusätzliche Einrichtung MOH für die Anschaltung besonderer Hörzeichen, beispielsweise auch von Musik während eins Wartzustandes vorgesehen. Eine Herstellung von Konferenzverbindungen ist über den Koppler KK und über entsprechende Konferenzsätze KONØ möglich.

Aus dem vorstehenden geht hervor, daß in den Zwischenleitungen die Spalten der zusätzlichen Koppler geschaltet sind. Die Zeilen dieser Koppler sind entweder direkt mit den genannten zusätzlichen Einrichtungen bzw. über weitere zusätzliche Koppler direkt mit anderen Einrichtungen, beispielsweise Vermittlungsplätze und Codeempfänger verbunden, wobei aber über die zusätzlichen Koppler zusätzliche Informationen, beispielsweise in Rhythmus anschaltbare Töne bzw. andere Informationen, auch Musik während des Wartezustandes, anschaltbar sind.

Die der zentralen Steuereinrichtung ST' zugeordneten Spei-

cher und Zusatzeinrichtungen werden nachfolgend bei der Beschreibung des erfindungsgemäßen Verfahrens näher erläutert.

Die Steuereinrichtungen ST nach FIG. 1, ST' nach FIG. 2 enthalten, wie vorstehend bereits erwähnt, mehrere unterschiedliche Speicher, die als veränderbare und nicht veränderbare Speicher für die Abwicklung von vermittlungstechnischen Verbindungen und auch für die Abwicklung von anderen Vorgängen als vermittlungstechnische Vorgänge dienen. In den veränderbaren Speichern werden die jeweiligen Zustandsinformationen für die Verarbeitung in der zentralen Steuereinrichtung ST bzw. ST' in bekannter Weise zwischengespeichert. In den nicht veränderbaren Speichern sind die Informationen gespeichert, die jeweils den Verfahrensablauf in der Anlage bestimmen. Sie sind spezifisch für die jeweilige Anlage. Mit DS bzw. DS' ist jeweils der Datenspeicher bezeichnet, in den die veränderbaren Kundendateninformationen und die veränderbaren Informationen, die die Dienste und Sonderfunktionen der Fernsprechnebenstellenanlage bestimmen gespeichert. In diesen veränderbaren Datenspeichern können auch die als Ergebnis sich ergebenden Informationen einer sicherheitstechnischen Prüfung zwischengespeichert werden. Eine solche Zwischenspeicherung kann erforderlich sein um bei Fehlererkennung eine Auswertung in der Weise vorzunehmen, daß nur bei solchen Prüfvorgängen unterschiedliche Fehlerkennungen eingeleitet werden, die der Fehlerart bzw. den Fehlerarten der unterschiedlichen Fehlerkennungen in einem letzten sicherheitstechnischen Prüfablauf entsprechen. In den erwähnten Datenspeicher DS sind auch solche veränderbaren Informationen gespeichert, die die Funktionszuteilung zu einer Teilnehmerstelle kennzeichnen. So kann beispielsweise eine erste Funktionskennung, die in Zuordnung zu einer Kennung einer entsprechenden Teilnehmerstelle in diesem Speicher DS

0153753

vorhanden ist, die Zuteilung einer Sekretärfunktion festlegen. Einer anderen Teilnehmerstelle kann durch Zuordnung
entsprechender Kennungen die Cheffunktion zugeteilt werden.

Der zentralen Steuereinrichtung ST bzw. ST' sind auch Vergleichsschaltmittel V bzw. V' zugeordnet, welche die eingehenden Informationen mit vorhandenen, bestimmten Vermittlungszuständen bzw. bestimmten Teilnehmerstellen zugeordneten Informationen vergleichen und dementsprechend
die Abgabe von Steuerbefehlen beeinflussen. Zusätzliche
Schaltmittel SA bzw. SA' dienen dazu zusätzliche Funktionsabläufe nachträglich in die Fernsprechnebenstellenanlage einzubringen. Der zentralen Steuereinrichtung ST
bzw. ST' sind auch Schaltmittel VT und BT bzw. VT' und
BT' zugeordnet, die die vermittlungstechnischen bzw. den
betriebstechnischen Vorgänge betreffen. Die vermittlungstechnischen Vorgänge beziehen sich auf die Herstellung
und Auslösung von vermittlungstechnischen Sprechverbindungen und Verbindungen für Datenübertragung, während
sich die betriebstechnischen Vorgänge auf Vorgänge beziehen, die dazu dienen die Fernsprechnebenstellenanlage
vor der Einschaltung bzw. auch nach der Einschaltung in
einer bestimmten Weise hinsichtlich des Verfahrensablaufes
bzw. der Dienste und Zusatzfunktionen einzurichten bzw. zu
verändern. Hierzu gehören beispielsweise die Zuteilung von
Berechtigungen, die Einrichtung von Sonderfunktionen und
Diensten, wie beispielsweise Aufschalten, Sammelanschluß,
Konferenzteilnehmer, Sekretär-/Cheffunktion und auch die
Zuteilung von für bestimmte Funktionsabläufe zu wählenden
Kennzahlen. Ferner sind der Steuereinrichtung ST bzw. ST'
Schaltmittel SiP bzw. SiP' für die Einleitung und Durchführung einer Sicherheitsprüfung zugeordnet. Für die Aufnahme und Auswertung von Steuerbefehlen einer Bedienungsstation bzw. einer Vermittlungsstation sind der Steuereinrichtung ST bzw. ST' ebenfalls besondere Schaltmittel
BT bzw. BT' zugeordnet.

Im vorliegenden Falle wird angenommen, daß die Übertragung einer Sonderkennzahl und/oder einer Sonderkennung von einer Vermittlungsstation bzw. von einer Bedienungsstation, die entsprechend der in Fig. 1 bzw. in Fig. 2 beschriebenen Beispiele in der Anlage an den Übertragungsweg anschaltbar bzw. welche von einem peripherem Gerät PG bzw. PG' zu Bewertungsmitteln der Steuereinrichtung ST bzw. ST' zur Einleitung anderer Vorgänge als vermittlungstechnische Vorgänge übertragbar sind.

Die anderen Vorgänge als vermittlungstechnische Vorgänge sind betriebstechnische Vorgänge, welche durchgeführt werden bevor die Anlage beim Kunden in Betrieb genommen wird bzw. auch nachträglich um kundenspezifische Daten in die Anlage einzugeben bzw. nachträglich zu ändern. Betriebstechnische Vorgänge werden auch zur Durchführung bestimmer Prüfvorgänge durchgeführt. Entsprechend der in der deutschen Offenlegungschrift DE-OS 31 30 125.8 beschriebenen Weise erfolgt mit der Übertragung der Sonderkennzahl und/oder der Sonderkennung eine Umschaltung von den vermittlungstechnischen Vorgängen auf die anderen Vorgänge beispielsweise in der Weise, daß an zentraler Stelle eine Information speicherbar ist, um sicherzustellen, daß der jeweils abzuwickelnde Verfahrensablauf entweder für vermittlungstechnische Vorgänge oder für andere als vermittlungstechnische Vorgänge steuerbar ist.

Im vorliegenden Falle ist weiterhin angenommen, daß der zentralen Steuereinrichtung ST bzw. ST' besondere Mittel VT bzw. VT' zugeordnet sind, welche die vorgenannte Sonderkennzahl und/oder Sonderkennung, die seitens der Vermittlungsstation, des Vermittlungsplatzes, der Bedienungsstation VP1 bzw. VFO bzw. PG bzw. PG' gesendet wurde, bewertet wird, so daß eine Umschaltung von den vermittlungstechnisch möglichen Vorgänge auf betriebstechnisch möglichen Vorgänge erfolgt. Hierzu wird in der Steuereinrichtung ST bzw. ST' (Fig. 1 bzw. Fig. 2) eine entsprechende Kennung, beispielsweise in einem Speicher der genannten Mittel VT bzw. VT' aufgenommen, und bei der Einleitung jedes vermittlungstechnischen bzw. betriebstechnischen Vorgangs abgefragt.

Nach Abschaltung der vermittlungstechnischen Vorgänge steuernde Mittel VT bzw. VT' (Fig. 1 bzw. Fig. 2) wird durch Bewertung der von einem Vermittlungsplatz VP1 bzw. einer Bedienungsstation VFO bzw. eines peripheren Gerätes PG bzw. PG' übertragenen Kennzahl sichergestellt, daß nachfolgende Vorgänge als betriebstechnische Vorgänge abgewickelt werden. Hierzu wird aufgrund der Bewertung der in der Steuereinrichtung ST bzw. ST' empfangenen, der gewählten Kennzahl entsprechenden Kennung eine erste Funktionskennung, beispielsweise für die Zuteilung einer Sekretärfunktion, in Zuordnung zu einer der Kennung entsprechenden Teilnehmerstelle, z.B. T1 in Fig. 1 bzw. Fig. 2, in einen veränderbaren, der Teilnehmerstelle T1 zugeordnete Informationen enthaltenden und bei jedem Verbindungsaufbau abgefragten Datenspeicher DS abgespeichert.

Wenn mit einer der ersten gewählten Kennzahl entsprechenden Kennung auf diese Weise eine besondere Funktionskennung einer Teilnehmerstelle zugeordnet ist, kann durch Abgabe jeweils eines weiteren besonderen Kennzeichens, beispielsweise durch das Betätigen einer an jedem Fernsprecher vorhandenen Rautentaste, und/ oder einer Wahl einer zweiten Kennzahl sowohl der der gewählten ersten Kennzahl zugeordneten Kennung im veränderbaren Speicher vorhandenen Speicherplatz als auch der einem weiteren, der jeweils gewählten weiteren Kennzahl entsprechenden Kennung zugeordneter Speicherplatz im veränderbaren Speicher eine weitere Information zugeordnet, die sowohl für den Betrieb der erstgenannten Teilnehmerstelle, z.B. T1, als auch für den Betrieb der betreffenden weiteren Teilnehmerstelle, z.B. T2 bzw. T3, maßgeblich ist, zugeordnet.

Auf diese Weise kann beispielsweise durch Wahl einer ersten Kennzahl eine Sekretärfunktion einer ersten Teilnehmerstelle und durch Wahl einer zweiten Kennzahl einer zweiten Teilnehmerstelle, z.B. T2, eine Cheffunktion und durch Wahl einer dritten Kennzahl eine dritte Teilnehmerstelle als zweite Teilnehmerstelle, z.B. T3, mit Cheffunktion bestimmt werden.

Eine Aufhebung dieser Funktionen erfolgt ebenfalls bei Vorliegen der Kennung für die Einleitung betriebstechnischer Vorgänge durch Wahl bestimmter Kennzahlen.

Durch Vergleichsschaltmittel V erfolgt eine Überprüfung der in der Steuereinrichtung ST bzw ST' (Fig. 1 bzw. Fig. 2) zu bewertenden Kennzahlen und/oder Kennung um auf diese Weise im Falle einer fehlenden Eindeutigkeit Signale zur Aufforderung zu einer Korrektur bzw. zur Kennzeichnung des Fehlverhaltens und/oder zum Löschen des bereits eingeleiteten Zustandes zu steuern.

In der vorstehend beschriebenen Weise ist es möglich in einer Fernsprechanlage vor der Einschaltung bzw. auch nachträglich Funktionen, die Vorzimmeranlagen betreffen, einzugeben. Ist die erfolgte Eingabe nicht eindeutig, so wird durch entsprechende Signale darauf aufmerksam gemacht, so daß auch eine Korrektur möglich wird.

Auf diese Weise können bestimmte Endstellen bestimmte Bedienfunktionen zugeteilt werden. Diese Zuteilung erfolgt von einer peripheren Einrichtung bzw. von einem Vermitt-

lungsplatz oder einer Bedienungsstation aus.

4 Patentansprüche

2 Figuren

Patentansprüche

1. Verfahren für eine Fernmeldeanlage, insbesondere für eine Fernsprechnebenstellenanlage, mit Steuereinrichtungen, mit den Steuereinrichtungen zugeordneten veränderbaren und nicht veränderbaren Speichern und mit Vergleichsmitteln für die wahlweise Abwicklung von vermittlungstechnischen Verbindungen bzw. von in Zusammenhang mit einer Funktionszuteilung zu für vermittlungstechnische Vorgänge vorgesehenen Mitteln gesteuerten, betriebstechnischen Vorgängen, wobei nach Einleitung der Abschaltung von die vermittlungstechnische Vorgänge steuernden Mitteln durch Übertragung einer entsprechenden Sonderkennzahl und/oder einer Sonderkennung zu entsprechenden Bewertungsmitteln einer Steuereinrichtung andere Vorgänge als vermittlungstechnische Vorgänge steuerbar sind, d a d u r c h   g e k e n n - z e i c h n e t  , daß nach Abschaltung der vermittlungstechnische Vorgänge steuernden Mittel (VT) durch Bewertung einer gewählten und von einer peripheren Einrichtung (beispielsweise Vermittlungsplatz VP1) übertragenen Kennzahl ein betriebstechnischer Vorgang in der Weise eingeleitet wird, daß aufgrund der Bewertung der in der Steuereinrichtung (ST) empfangenen, der gewählten Kennzahl entsprechenden Kennung eine erste Funktionskennung (beispielsweise für eine Zuteilung einer Sekretärfunktion) in Zuordnung zu einer der Kennung entsprechenden Teilnehmerstelle (T1) in einen veränderbaren, der Teilnehmerstelle (T1) zugeordnete Informationen enthaltenden und bei jedem Verbindungsaufbau abgefragten Datenspeicher (DS) abgespeichert wird.

2. Verfahren für eine Fernmeldeanlage nach Anspruch 1, d a d u r c h   g e k e n n z e i c h n e t  , daß durch Bewertung einer nach einer ersten gewählten Kennzahl durch Abgabe jeweils eines Sonderkennzeichens (beispielsweise Betätigen einer Rautentaste) und einer
zweiten Kennzahl sowohl der der gewählten ersten Kennzahl zugeordneten Kennung im veränderbaren Speicher
(VSB) als auch eine einem der jeweils gewählten weiteren Kennzahl und entsprechenden Kennung zugeordnete Kennung im
veränderbaren Speicher (VSB) als weitere Information
zugeordnet wird, welche für den Betrieb der betreffenden Teilnehmerstelle (T1 bzw. T2 bzw. T3) maßgeblich
ist.

3. Verfahren für eine Fernmeldeanlage nach Anspruch 1
bzw. 2,  d a d u r c h   g e k e n n z e i c h n e t  ,
daß mit der ersten Kennzahl eine Sekretärfunktion und/
oder mit zumindest einer der weiteren gewählten Kennzahlen eine Cheffunktion einer Teilnehmerstelle (T2 bzw.
T3) zugeordnet wird.

4. Verfahren für eine Fernmeldeanlage nach einem der
Ansprüche 1 bis 3,  d a d u r c h   g e k e n n -
z e i c h n e t  , daß durch Vergleichsschaltmittel
(V) eine Überprüfung der in der Steuereinrichtung (ST)
zu bewertenden Kennzahlen und/oder Kennung erfolgt und
im Falle einer fehlenden Eindeutigkeit Signale zur Aufforderung zu einer Korrektur bzw. zur Kennzeichnung
des Fehlverhaltens und/oder zum Löschen des bereits eingeleiteten Zustandes steuerbar sind.

FIG 1

0153753

1/2

FIG 2

2/2

0153753